Europäisches Patentamt

European Patent Office

Office européen des brevets

(19)

(11) Numéro de publication : **0 586 640 B1**

(12)

# FASCICULE DE BREVET EUROPEEN

(45) Date de publication du fascicule du brevet :
06.09.95 Bulletin 95/36

(51) Int. Cl.⁶ : **H01G 9/20, H01M 14/00**

(21) Numéro de dépôt : **93905130.6**

(22) Date de dépôt : **12.03.93**

(86) Numéro de dépôt international :
**PCT/CH93/00068**

(87) Numéro de publication internationale :
**WO 93/19479 30.09.93 Gazette 93/24**

(54) **CELLULE PHOTOELECTROCHIMIQUE REGENERATRICE TRANSPARENTE.**

(30) Priorité : **26.03.92 CH 962/92**

(43) Date de publication de la demande :
**16.03.94 Bulletin 94/11**

(45) Mention de la délivrance du brevet :
**06.09.95 Bulletin 95/36**

(84) Etats contractants désignés :
**AT BE CH DE ES FR GB IT LI NL SE**

(56) Documents cités :
**EP-A- 0 333 641**
**EP-A- 0 407 182**
**WO-A-91/16719**
**US-A- 4 117 210**
**US-A- 4 215 155**
**US-A- 5 053 293**

(73) Titulaire : **ASULAB S.A.**
**Faubourg du Lac 6**
**CH-2501 Bienne (CH)**

(72) Inventeur : **SAURER, Eric**
**17, chemin de Cuard**
**CH-2022 Bevaix (CH)**
Inventeur : **GRAETZEL, Michael**
**7A, chemin du Marquisat**
**CH-1025 St-Sulpice (CH)**

(74) Mandataire : **de Montmollin, Henri et al**
**ICB**
**Ingénieurs Conseils en Brevets SA**
**Rue des Sors 7**
**CH-2074 Marin (CH)**

## Description

L'invention concerne une cellule photoélectrochimique régénératrice et plus particulièrement une telle cellule qui n'absorbe pas ou très faiblement les rayonnements électromagnétiques dont les longueurs d'onde sont dans le domaine visible. Par cellule photoélectrochimique régénératrice on entend généralement un système électrochimique dans lequel les réactions aux électrodes sont réversibles et dans lequel les différentes espèces chimiques en jeu sont conservées.

On connaît déjà des cellules photoélectrochimiques régénératrices du type à interface oxyde semiconducteur/électrolyte. Dans ces cellules, l'oxyde semiconducteur est déposé, sous forme d'une couche continue, sur un substrat recouvert préalablement d'une électrode. Ces cellules présentent toutefois l'inconvénient de n'absorber qu'une très faible proportion de la lumière incidente, si bien que leur rendement est trop faible pour produire une quantité d'énergie utilisable.

On connaît par ailleurs de la demande de brevet internationale PCT 91/16719 une cellule photoélectrochimique régénératrice comportant une couche de dioxyde de titane qui est réalisée sous forme d'une nanostructure poreuse formée de particules colloïdales frittées et recouvertes d'une couche monomoléculaire de chromophores. Bien que présentant un rendement élevé, cette cellule présente toutefois l'inconvénient d'absorber une grande partie de la lumière incidente pour des longueurs d'ondes se situant dans le visible et dans l'ultraviolet. Or, il existe de nombreuses applications pour lesquelles il est préférable, voire même indispensable que la cellule n'absorbe pas la lumière dans le domaine visible.

Le document EP 407 182 décrit une cellule photoélectrique comprenant notamment une membrane poreuse d'un oxyde semiconducteur formée de particules colloïdales frittées et qui ne comprend pas de chromophores. Toutefois, le rendement d'une telle cellule n'est pas entièrement satisfaisant.

L'invention a donc pour but principal de remédier au inconvénients de l'art antérieur susmentionné en fournissant une cellule photoélectrochimique régénératrice qui ne diffuse pas la lumière incidente et qui n'absorbe pas la lumière pour des longueurs d'ondes se situant dans le visible, tout en présentant un taux satisfaisant de conversion de l'énergie de la lumière incidente en énergie électrique.

A cet effet l'invention a pour objet une cellule photoélectrochimique régénératrice comprenant un premier substrat transparent comportant une première électrode transparente, un second substrat transparent comportant une seconde électrode transparente sur laquelle est déposée une première couche d'un oxyde semiconducteur photoélectrochimiquement actif réalisée sous forme d'une nanostructure poreuse formée de particules colloïdales frittées dont le diamètre est inférieure à la longueur de diffusion des porteurs de charge minoritaire, les substrats étant arrangés entre eux pour définir un espace rempli d'un électrolyte, ledit électrolyte imprégnant ladite structure poreuse de sorte qu'il est en contact avec l'électrode portée par le premier substrat, caractérisée en ce que le second substrat comporte en outre une seconde couche continue et dense d'un oxyde semiconducteur s'étendant entre la seconde électrode et la première couche d'oxyde semiconducteur de sorte que l'électrolyte est en contact avec la couche portée par la seconde électrode.

La présence de cette seconde couche augmente de façon notable le rendement ainsi que la stabilité dans le temps de la cellule selon l'invention et cela sans avoir à ajouter de chromophores de sorte que l'on obtient une cellule qui est transparente à la lumière ayant des longueurs d'ondes dans le domaine visible et qui est non diffusante, tout en présentant une efficacité satisfaisante dans de nombreuses applications.

Aussi, le domaine d'application de la cellule est élargi par rapport à celui des cellules de l'art antérieur. Toutes les couches formant la cellule selon l'invention sont donc invisibles à l'oeil nu.

Selon une caractéristique de l'invention, la seconde couche d'oxyde semiconducteur est de même nature que la première couche d'oxyde semiconducteur.

De préférence, la seconde couche d'oxyde semiconducteur présente une épaisseur s'étendant entre 10 et 50 nanomètres.

Selon une autre caractéristique de l'invention, le premier substrat comporte en outre une couche électrocatalytique s'étendant entre la première électrode et l'électrolyte.

Selon une autre caractéristique de l'invention, les particules colloïdales ont un diamètre compris entre 1 et 200 nanomètres.

Cette nanostructure permet ainsi aux porteurs minoritaires d'atteindre la jonction électrolyte/semiconducteur avant qu'une recombinaison de porteurs apparaissent et par conséquent de réaliser une cellule photoélectrochimique efficace.

Selon encore une autre caractéristique, la nanostructure présente une épaisseur s'étendant dans une gamme de 10 à 20'000 nanomètres.

Cette caractéristique en liaison avec le faible diamètre des particules colloïdales permet d'obtenir une couche qui ne diffuse pas la lumière.

D'autres caractéristiques et avantages de l'invention apparaîtront à la lecture de la description d'un mode de réalisation de l'invention, donné à titre illustratif et non limitatif, en liaison avec les dessins annexés parmi lesquels:

- la figure 1 représente schématiquement et en coupe une cellule photoélectrochimique régénératrice selon l'invention; et
- la figure 2 est une vue partielle agrandie de la cellule de la figure 1.

Dans le cadre de la description qui suit on entendra par l'adjectif transparent, transparent à la lumière visible et non diffusant.

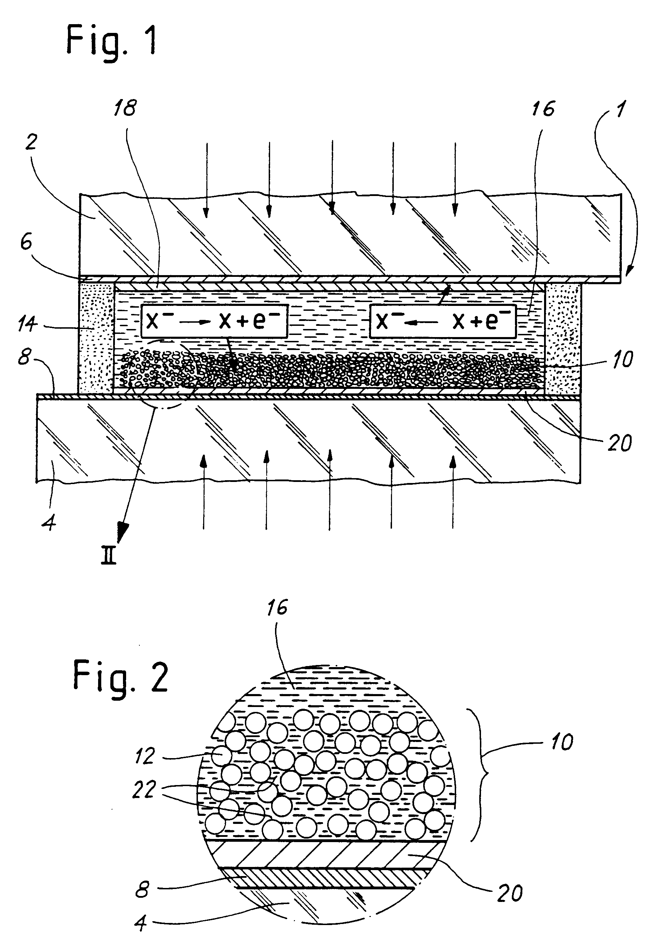

En se référant à la figure 1, on voit une cellule photoélectrochimique régénératrice désignée par la référence générale 1.

La cellule 1 comprend un premier substrat 2 transparent et un second substrat 4 également transparent comportant respectivement sur la totalité de la surface de leurs faces en regard une électrode 6, (respectivement 8) transparente. Pour des commodités de la description, les électrodes 6,8 pourront être désignées respectivement par première électrode et seconde électrode.

Ces électrodes 6, 8 sont de préférence réalisées sous la forme d'une couche mince d'un mélange d'oxyde d'indium/étain ou d'oxyde d'étain/antimoine. Bien entendu, l'homme de métier pourra choisir tout autre couche transparente équivalente.

Le substrat 4 comporte en outre une première couche 10 d'un oxyde semiconducteur photoélectrochimiquement actif réalisée sous forme d'une nanostructure poreuse formée de particules colloïdales 12 frittées qui sera décrites plus en détail ci-après.

Les substrats 2 et 4 sont réunis entre eux par exemple, par un cadre de scellement 14 pour définir un espace rempli d'un électrolyte 16 comprenant de façon structure poreuse 10 de sorte que l'interface électrolyte oxyde semiconducteur présente une surface effective très grande

Selon l'invention, l'électrode 8 est recouverte d'une seconde couche continue et dense 20 d'un oxyde semiconducteur.

La seconde couche d'oxyde semiconducteur 20 s'étend ainsi entre la seconde électrode 8 et la première couche d'oxyde semiconducteur 10.

La couche continue et dense d'oxyde semiconducteur 20 permet de limiter voire d'éviter tout court-circuit pouvant se produire sur la seconde électrode 8 entre les formes oxydées et réduites du couple rédox contenu dans l'électrolyte 16 et par là-même augmenter la tension disponible aux bornes des électrodes de la cellule.

Dans l'exemple représenté, l'électrode 6 est par ailleurs recouverte d'une couche électrocatalytique 18 qui s'étend entre l'électrode 6 et l'électrolyte 16.

La couche électrocatalytique 18 permet de réduire la surtension pour la réduction de la forme oxydée du couple rédox contenu dans l'électrolyte 16 et d'améliorer les performances globales de la cellule.

La couche électrocatalytique 18 peut par exemple être déposée par voie galvanique ou par dépôt sous vide, et la couche d'oxyde semiconducteur 20 peut, quant à elle, être par exemple déposée par dépôt chimique ou physique en phase vapeur.

On notera que le dessin ne reflète pas les dimensions exactes de la cellule ainsi formée, ces dimensions ayant été fortement exagérées pour des raison de clarté.

En se référant également à la figure 2, on voit que la couche 10 comporte des pores 22 formés par les vides présents entre les particules 12 de l'oxyde semiconducteur. Ces pores 22 sont interconnectés entre eux et sont remplis de l'électrolyte 16 de sorte que la percolation de ce dernier à travers la couche 10 est facilement réalisée.

Les particules colloïdales 12 présentent, de préférence, un diamètre de 1 à 200 nanomètres et forment à la surface du substrat 4 une couche dont l'épaisseur est comprise entre 10 et 20'000 nanomètres. Ceci conduit donc à réaliser une couche 10 présentant une surface effective très élevée c'est-à-dire une couche dont le rapport surface réelle/surface projetée est de l'ordre de 2000.

On notera à ce propos que la faible taille des particules 12, en liaison avec la faible épaisseur de la couche 10, offre l'avantage d'obtenir une couche 10 qui ne diffuse pas la lumière.

En outre, la taille des particules 12 et l'épaisseur de la couche 10 ont une incidence importante sur la réponse de la couche 10 à l'excitation par la lumière incidente.

En effet, les particules 12 de la couche 10 absorbent les photons dont l'énergie est égale ou dépasse la différence d'énergie entre la bande de conduction et la bande de valence. L'absorption de lumière, symbolisée par des flèches au dessin, entraîne ainsi la création de paires électrons-trous dans les particules 12, contrairement au cas des particules recouvertes d'un film de chromophores de l'art antérieur, film dans lequel la lumière incidente est absorbée par le chromophore et non par l'oxyde semiconducteur. Dans ce cas, les électrons sont transférés à partir des niveaux excités des chromophores dans la bande de conduction de l'oxyde semiconducteur, les charges positives correspondantes associées aux chromophores étant piégées à la surface du semiconducteur provoquant ainsi une séparations des charges dont résulte l'effet photovoltaïque recherché. Avec un oxyde semiconducteur de type n tel que le $TiO_2$, les électrons sont les porteurs majoritaires alors que les trous sont les porteurs minoritaires Or, lorsqu'un tel dispositif semiconducteur/électrolyte est utilisé pour créer de l'électricité à partir de la lumière absorbée, il est nécessaire que les trous puissent diffuser jusqu'à la jonction semiconducteur/électrolyte avant que la recombinaison avec les électrons puisse se produire. En d'autres termes, la longueur de diffusion des porteurs minoritaire désignée par $l_{pm}$ doit être plus longue que la distance que ces porteurs doivent parcourir avant d'atteindre la jonction. Cette longueur de diffusion est définie par

$$l_{pm} = (2D\tau)^{0,5}$$

dans laquelle τ est la durée de vie d'un trou et D est la constante de diffusion du porteur minoritaire. A titre d'exemple la valeur de $l_{pm}$ est de 100 nanomètres pour le $TiO_2$.

On réalise ainsi, selon l'invention, une couche d'oxyde semiconducteur 10 formée d'une agglomération de particules colloïdales 12 dont le diamètre est inférieur à la longueur de diffusion des porteurs de charge minoritaire de sorte que ces porteurs ont une grande probabilité d'atteindre la jonction semiconducteur/électrolyte et obtenir une séparation efficace des porteurs de charges si bien que le rendement de conversion est augmenté.

Pour le dépôt de la couche 10, on se référera par exemple au procédé de dépôt d'une telle couche décrit dans la demande de brevet internationale PCT 91/167 19.

L'oxyde semiconducteur formant la couche 10 peut être choisi parmi l'ensemble des oxydes semiconducteurs compris dans les trois groupes suivants.

Le premier groupe comprend les oxydes des éléments de transition, les oxydes des éléments des colonnes 13 et 14 de la classification périodique moderne (cf. Cours de chimie physique de Paul Arnaud aux éditions Dunod 1988), et les oxydes des terres rares.

Le deuxième groupe comprend les oxydes mixtes comprenant un mélange formé de deux ou plusieurs oxydes du premier groupe.

Le troisième groupe comprend les oxydes mixtes comprenant un mélange formé d'un ou plusieurs oxydes du premier groupe avec des oxydes des éléments des colonnes 1 et 2 de la classification périodique moderne.

De préférence, l'oxyde semiconducteur formant la couche 10 est choisi parmi l'ensemble des matériaux comprenant le $TiO_2$, le $La_2O_3$, le $ZrO_2$, le $Nb_2O_5$, le $WO_3$, le $SrTiO_3$, le $CaTiO_3$, le titanate de sodium, et le niobiate de potassium.

Selon un mode de réalisation particulier de l'invention, l'électrolyte 16 peut être un électrolyte liquide et peut être choisi, de préférence, parmi l'ensemble des électrolytes comprenant un couple redox constitué par le sulfate de cerium(III) et le cerium (IV), le bromure de sodium et le brome, ainsi que l'iodure de lithium et l'iode en solution dans l'un ou l'autre des solvants choisis dans l'ensemble comprenant l'eau, la N-méthyloxazolidinone, le nitrométhane, le carbonate de propylène, le carbonate d'éthylène, la butyrolactone, le diméthyl imidazolidine, le N-méthylpyrrolidine ou dans un mélange desdits solvants.

Les réactions d'oxydation et de réduction des espèces présentes dans l'électrolyte ont été représentées symboliquement au dessin au niveau des interfaces électrolyte 16/couche électrocatalytique 18 et électrolyte 16/couche d'oxyde semiconducteur 10.

Selon un autre mode de réalisation l'électrolyte 16 peut être aussi solide et dans ce cas on pourra choisir un électrolyte polymère tel que le polyoxyéthylène/LiI.

Selon une variante du mode de réalisation comprenant un électrolyte solide, l'électrolyte 16 est de préférence le iodure de lithium, et le iodure de pyridium.

La couche électrocatalytique 18 est de préférence un film transparent formé d'une à dix couches monomoléculaires d'un métal choisi parmi l'ensemble des métaux comprenant le platine, le ruthénium, le rhodium, le palladium, l'iridium, l'osmium et les oxydes conducteurs des éléments des colonnes 8 à 10 de la classification périodique moderne. La seconde couche d'oxyde semiconducteur 20 est avantageusement de même nature que la première couche 10.

## Revendications

1. Cellule photoélectrochimique régénératrice (1) comprenant un premier substrat (2) transparent comportant une première électrode (6) transparente, un second substrat (4) transparent comportant une seconde électrode (8) transparente sur laquelle est déposée une première couche (10) d'un oxyde semiconducteur photoélectrochimiquement actif réalisée sous forme d'une nanostructure poreuse formée de particules (12) colloïdales frittées dont le diamètre est inférieur à la longueur de diffusion des porteurs de charge minoritaire, les substrats (2, 4) étant arrangés entre eux pour définir un espace rempli d'un électrolyte (16), ledit électrolyte (16) imprégnant ladite structure poreuse de sorte qu'il est en contact avec l'électrode (6) portée par le premier substrat (2), caractérisée en ce que le second substrat comporte en outre une seconde couche (20) continue et dense d'un oxyde semiconducteur s'étendant entre la seconde électrode (8) et la première couche (10) d'oxyde semiconducteur, de sorte que l'ectrolyte (16) est en contact avec la couche (20) portée par la seconde électrode.

2. Cellule selon la revendication 1, caractérisée en ce que la seconde couche (20) d'oxyde semiconducteur est de même nature que la première couche (10) d'oxyde semiconducteur.

3. Cellule selon la revendication 1 ou 2, caractérisée en ce que la seconde couche (20) d'oxyde semiconducteur présente une épaisseur s'étendant entre 10 et 50 nanomètres.

4. Cellule selon l'une des revendications 1 à 3, caractérisée en ce que le premier substrat (2) comporte en outre une couche (18) électrocatalytique s'étendant entre la première électrode (6) et l'électrolyte (16).

**5.** Cellule selon la revendication 4, caractérisée en ce que la couche (18) électrocatalytique est, formée d'une pluralité couche monomoléculaire (20) d'un métal choisi parmi l'ensemble des métaux comprenant le platine, le ruthénium, le rhodium, le palladium, l'iridium, l'osmium et les oxydes conducteurs des éléments des colonnes 8 à 10 de la classification périodique moderne.

**6.** Cellule selon l'une quelconque des revendications précédentes, caractérisée en ce que les particules (12) colloïdales formant la première couche (10) d'oxyde semiconducteur ont un diamètre compris entre 1 et 200 nanomètres.

**7.** Cellule selon l'une quelconque des revendications précédentes, caractérisée en ce que la structure poreuse présente une épaisseur comprise entre 10 et 20'000 nanomètres

**8.** Cellule selon l'une quelconque des revendications précédentes, caractérisée en ce que l'oxyde semiconducteur est choisi parmi l'ensemble des oxydes semiconducteurs d'un premier groupe comprenant les oxydes des éléments de transition, les oxydes des éléments des colonnes 13 et 14 de la classification périodique moderne, et les oxydes des terres rares, d'un deuxième groupe comprenant les oxydes mixtes formés d'un mélange de deux ou plusieurs oxydes du premier groupe et d'un troisième groupe comprenant les oxydes mixtes formés d'un mélange d'un ou plusieurs oxydes du premier groupe avec des oxydes des éléments des colonnes 1 et 2 de la classification périodique moderne.

**9.** Cellule selon la revendication 8, caractérisée en ce que l'oxyde semiconducteur est choisi parmi l'ensemble des matériaux comprenant le $TiO_2$, le $La_2O_3$, le $ZrO_2$, le $Nb_2O_5$, le $WO_3$, le $SrTiO_3$. le $CaTiO_3$, le titanate de sodium, et le niobiate de potassium.

**10.** Cellule selon l'une quelconque des revendications 1 à 9, caractérisée en ce que l'électrolyte est un électrolyte liquide et est choisi parmi l'ensemble des électrolytes comprenant un couple redox constitué par le sulfate de cerium(III) et le cerium (IV), le bromure de sodium et le brome, ainsi que l'iodure de lithium et l'iode en solution dans l'un ou l'autre des solvants choisis dans l'ensemble comprenant l'eau, la N-méthyloxazolidinone, le nitrométhane, le carbonate de propylène, le carbonate d'éthylène, la butyrolactone, le diméthyl imidazolidine, le N-méthylpyrrolidine ou dans un mélange desdits solvants.

**11.** Cellule selon l'une quelconque des revendications 1 à 10, caractérisée en ce que l'électrolyte est solide.

**12.** Cellule selon la revendication 11, caractérisée en ce que l'électrolyte est un électrolyte polymère.

**13.** Cellule selon la revendication 11, caractérisée en ce que l'électrolyte est du poly-oxyéthylène/Lil.

**14.** Cellule selon la revendication 11, caractérisée en ce que l'électrolyte comprend de l'iodure de lithium, et de l'iodure de pyridium.

**Patentansprüche**

**1.** Sich regenerierende photoelektrochemische Zelle (1), umfassend ein erstes transparentes Substrat (2) mit einer ersten transparenten Elektrode (6), ein zweites transparentes Substrat (4) mit einer zweiten transparenten Elektrode (8), auf der eine erste Schicht (10) eines photoelektrochemisch aktiven halbleitenden Oxids aufgebracht ist, realisiert in Form einer porösen Nanostruktur, gebildet aus koloidalen gefritteten Partikeln (12), deren Durchmesser kleiner ist als die Diffusionslänge der Minoritätsladungsträger, welche Substrate (2, 4) zueinander so angeordnet sind, daß sie einen mit einem Elektrolyt (16) gefüllten Raum begrenzen, welcher Elektrolyt (16) die poröse Struktur derart imprägniert, daß er in Kontakt ist mit der von dem ersten Substrat (2) getragenen Elektrode (6), dadurch gekennzeichnet, daß das zweite Substrat ferner eine zweite kontinuierliche und dichte Schicht eines halbleitenden Oxids umfaßt, die sich zwischen der zweiten Elektrode (8) und der ersten Schicht (10) aus halbleitendem Oxid erstreckt, derart, daß der Elektrolyt (16) in Kontakt mit der von der zweiten Elektrode getragenen Schicht (20) ist.

**2.** Zelle nach Anspruch 1, dadurch gekennzeichnet, daß die zweite Schicht (20) aus halbleitendem Oxid von derselben Natur ist wie die erste Schicht (10) aus halbleitendem Oxid.

**3.** Zelle nach Anspruch 1 oder 2, dadurch gekennzeichnet, daß die zweite Halbleiteroxidschicht (20) eine Dicke besitzt, die zwischen 10 und 50 Nanometern liegt.

**4.** Zelle nach einem der Ansprüche 1 bis 3, dadurch gekennzeichnet, daß das erste Substrat (2) ferner eine elektrokatalytische Schicht (18) aufweist, die sich zwischen der ersten Elektrode (6) und dem Elektrolyten (16) erstreckt.

**5.** Zelle nach Anspruch 4, dadurch gekennzeichnet, daß die elektrokatalytisch aktive Schicht (18) aus einer Mehrzahl von monomolekularen Schichten (20) eines Metalls gebildet ist, gewählt unter der Gesamtheit der Metalle, bestehend aus Platin, Ruthenium, Rhodium, Palladium, Iridium, Osmium und den leitenden Oxiden der Elemente der Spalten 8 bis 10 der modernen periodischen Klassifikation.

6. Zelle nach einem der vorangehenden Ansprüche, dadurch gekennzeichnet, daß die kolloidalen Partikel (12), die die erste Halbleiteroxidschicht (10) bilden, einen Durchmesser besitzen, der zwischen 1 und 200 Nanometern liegt.

7. Zelle nach einem der vorangehenden Ansprüche, dadurch gekennzeichnet, daß die poröse Struktur eine Dicke aufweist, die zwischen 10 und 20 000 Nanometern liegt.

8. Zelle nach einem der vorangehenden Ansprüche, dadurch gekennzeichnet, daß das Halbleiteroxid gewählt wird unter der Gesamtheit der Halbleiteroxide einer ersten Gruppe, umfassend die Oxide der Übergangselemente, die Oxide der Elemente der Spalten 13 und 14 der modernen periodischen Klassifikation und die Oxide der seltenen Erden, einer zweiten Gruppe, umfassend die Mischoxide, gebildet aus einem Gemisch von zwei oder mehreren Oxiden der ersten Gruppe, und einer dritten Gruppe, umfassend die Mischoxide, gebildet aus einem Gemisch eines oder mehrerer der Oxide der ersten Gruppe mit Oxiden der Elemente der Spalten 1 und 2 der modernen periodischen Klassifikation.

9. Zelle nach Anspruch 8, dadurch gekennzeichnet, daß das Halbleiteroxid gewählt wird unter der Gesamtheit der Materialien, umfassend $TiO_2$, $La_2O_3$, $ZrO_2$, $Nb_2O_5$, $WO_3$, $SrTiO_3$, $CaTiO_3$, Natriumtitanat und Kaliumniobat.

10. Zelle nach einem der Ansprüche 1 bis 9 , dadurch gekennzeichnet, daß der Elektrolyt ein flüssiger Elektrolyt ist und gewählt wird unter der Gesamtheit der Elektrolyte, umfassend ein Redoxpaar, gebildet von Cerium-(III)-Sulfat und Cerium-(IV), Natriumbromit und Brom wie auch Lithiumjodid und Jod in Lösung in dem einen oder anderen Lösungsmittel, gewählt unter der Gesamtheit, die umfaßt Wasser, N-Methyloxazolidinon, Nitromethan, Propylenkarbonat, Äthylenkarbonat, Butyrolacton, Dimethylimidazolidin, N-Methylpyrrolidin oder in einem Gemisch der genannten Lösungsmittel.

11. Zelle nach einem der Ansprüche 1 bis 10, dadurch gekennzeichnet, daß der Elektrolyt fest ist.

12. Zelle nach Anspruch 11, dadurch gekennzeichnet, daß der Elektrolyt ein Polymerelektrolyt ist.

13. Zelle nach Anspruch 11, dadurch gekennzeichnet, daß der Elektrolyt Polyoxyäthylen/Lil ist.

14. Zelle nach Anspruch 11, dadurch gekennzeichnet, daß der Elektrolyt Lithiumjodid und Pyridiumjodid umfaßt.

## Claims

1. Regenerating photoelectrochemical cell (1) having a first transparent substrate (2) which has a first transparent electrode (6), a second transparent substrate (4) which has a second transparent electrode (8) on which is deposited a first layer (10) of a photoelectrochemically active semiconductor oxide in the form of a porous nanostructure of sintered colloidal particles (12) the diameter of which is less than the diffusion length of the minority charge carriers, the substrates (2, 4) being so disposed in relation to one another as to define a space filled with electrolyte (16), said electrolyte (16) impregnating said porous structure in a manner such that it is in contact with the electrode (6) disposed on the first substrate (2), characterized in that the second substrate also has a second compact continuous semiconductor oxide layer (20) extending between the second electrode (8) and the first semiconductor oxide layer (10) so that the electrolyte (16) is in contact with the the layer (20) disposed on the second electrode.

2. Cell according to claim 1, characterized in that the second semiconductor oxide layer (20) is of the same type as the first semiconductor oxide layer (10).

3. Cell according to claim 1 or 2, characterized in that the second semiconductor oxide layer (20) has a thickness of from 10 to 50 nanometres.

4. Cell according to one of claims 1 to 3, characterized in that the first substrate (2) also has an electrocatalytic layer (18) extending between the first electrode (6) and the electrolyte (16).

5. Cell according to claim 4, characterized in that the electrocatalytic layer (18) is made up of a plurality of monomolecular layers (20) of a metal selected from the group of metals comprising platinum, ruthenium, rhodium, palladium, iridium, osmium and conducting oxides of the elements of columns 8 to 10 of the modern periodic classification table.

6. Cell according to any one of the preceding claims, characterized in that the colloidal particles (12) forming the first semiconductor oxide layer (10) have a diameter of from 1 to 200 nanometres.

7. Cell according to any one of the preceding claims, characterized in that the porous structure has a thickness of from 10 to 20,000 nanometres.

8. Cell according to any one of the preceding claims, characterized in that the semiconductor oxide is selected from amongst semiconductor oxides of a first group comprising the oxides of the transition elements, the oxides of the elements of columns 13 and 14 of the modern periodic classification table and the oxides of rare earths, of a second group comprising mixed oxides formed of a mixture of two or several oxides of the first group and of a third group comprising mixed oxides formed of a mixture of one or several oxides of the first group with the oxides of the elements of columns 1 and 2 of the modern periodic classification table.

9. Cell according to claim 8, characterized in that the semiconductor oxide is selected from the group consisting of $TiO_2$, $La_2O_3$, $ZrO_2$, $Nb_2O_5$, $WO_3$, $SrTiO_3$, $CaTiO_3$, sodium titanate and potassium niobiate.

10. Cell according to any one of claims 1 to 9, characterized in that the electrolyte is a liquid electrolyte and is selected from amongst the electrolytes comprising a redox couple composed of cerium(III) sulfate and cerium(IV), sodium bromide and bromine, as well as lithium iodide and iodine in solution in one or other of the solvents selected from amongst water, N-methyloxazolidinone, nitromethane, propylene carbonate, ethylene carbonate, butyrolactone, dimethyl imidazolidine, N-methylpyrrolidine or in a mixture of said solvents.

11. Cell according to any one of claims 1 to 10, characterized in that the electrolyte is solid.

12. Cell according to claim 11, characterized in that the electrolyte is a polymer electrolyte.

13. Cell according to claim 11, characterized in that the electrolyte is of- polyoxyethylene/LiI.

14. Cell according to claim 11, characterized in that the electrolyte comprises lithium iodide and pyridium iodide.

# Fig. 1

$$x^- \longrightarrow x + e^-$$ $$x^- \longleftarrow x + e^-$$

# Fig. 2